# EUROPÄISCHE PATENTSCHRIFT

(11) **EP 3 686 095 B1**
(45) Veröffentlichungstag und Bekanntmachung des Hinweises auf die Patenterteilung: **20.10.2021**
(21) Anmeldenummer: 20152817.1
(22) Anmeldetag: 21.01.2020
(51) Int. Cl.: B62H 3/10, B62H 3/06

(54) **HALTERUNG FÜR EIN FAHRRAD IN SEINER FAHRLAGE**
HOLDER FOR A BICYCLE IN ITS DRIVING POSITION
SUPPORT POUR UNE BICYCLETTE DANS SA POSITION DE CONDUITE

(30) Priorität: 24.01.2019 AT 500562019
(43) Veröffentlichungstag der Anmeldung: 29.07.2020
(73) Patentinhaber: Sova, Peter, 90877 Borsky Mikulas (SK)
(72) Erfinder: Sova, Peter, 90877 Borsky Mikulas (SK)
(74) Vertreter: Hübscher & Partner Patentanwälte GmbH

(56) Entgegenhaltungen:
- DE-A1- 2 905 788
- DE-U1- 9 300 390
- FR-A1- 2 789 646
- GB-A- 189 811 521
- US-A- 559 312
- US-A- 598 040

## Beschreibung

Die Erfindung bezieht sich auf eine Halterung für ein Fahrrad in seiner Fahrlage, mit einer an einem Steher vorgesehenen Rahmenaufnahme zur Abstützung des Fahrradrahmens in einer Fahrrichtung, wobei der Steher auf der der Rahmenaufnahme in Fahrrichtung gegenüberliegenden Seite eine Reifenaufnahme aufweist, die über einen Stelltrieb in Fahrrichtung zwischen einer Ruhestellung und einer Haltestellung verlagerbar ist, und wobei der Stelltrieb eine Gelenkschere bildet, die wenigstens teilweise in den Steher einziehbar an diesem angelenkt ist.

Aus dem Stand der Technik sind Vorrichtungen zur Befestigung eines Fahrrades in einer Abstellposition bekannt (US 5553715), die ein in einen Untergrund verbautes Grundgehäuse und einen aus diesem Grundgehäuse ausschwenkbaren, zwischen einer Packlage und einer Stützlage verlagerbaren Stützarm umfassen. Der Stützarm weist einen absperrbaren Aufnahmeabschnitt auf, der einen Unterrohrabschnitt des Fahrradrahmens umfangsseitig umschließt, wodurch das abgestellte Fahrrad in seiner Position festgehalten und diebstahlgesichert wird. Nachteilig ist daran allerdings, dass der Anwender beim Abstell- bzw. Entnahmevorgang des Fahrrades beide Hände benötigt, um den Unterrohrabschnitt des Fahrrades in den Aufnahmeabschnitt einzuführen und festzuklemmen bzw. aus diesem herauszuführen, sodass das Fahrrad währenddessen beispielsweise vom Körper des Anwenders abgestützt werden muss. Infolgedessen gestaltet sich der Abstell- und Entnahmevorgang nicht nur umständlich und zeitaufwändig, sondern es besteht auch ein erhöhtes Risiko, dass das Fahrrad dabei umkippt und beschädigt wird.

Darüber hinaus sind aus der gattungsgemäßen FR 2789646 A1 Halterungen für ein Fahrrad in seiner Fahrlage bekannt, die eine an einem Steher vorgesehene Rahmenaufnahme zur Abstützung des Fahrradrahmens über dessen Kettenstreben in einer Fahrrichtung aufweist. Der Steher umfasst außerdem auf der der Rahmenaufnahme in Fahrrichtung gegenüberliegenden Seite eine Reifenaufnahme, die über einen Stelltrieb in Fahrrichtung zwischen einer Ruhestellung und einer Haltestellung durch Verschwenken eines sich in Fahrrichtung erstreckenden Rohres verlagerbar ist. Bedingt durch die relativ sperrige Bauweise jener Halterung besteht abgesehen vom erhöhten Platzbedarf ein Nachteil darin, dass für den Anwender kein rascher und bequemer Abstell- sowie Entnahmevorgang des Fahrrades ermöglicht wird. Ähnliche Halterungen für ein Fahrrad, die ebenfalls einen Steher, eine Rahmen- bzw. Reifenaufnahme sowie einen Stelltrieb umfassen, sind auch aus der US 598040 A, der GB 11521 A.A.D., der US 559312 A oder der DE 9300390 U1 bekannt.

Der Erfindung liegt somit die Aufgabe zugrunde, eine Halterung der eingangs geschilderten Art so auszugestalten, dass sowohl das Abstellen als auch das Entnehmen des Fahrrades mit geringem Zeit- und Kraftaufwand verbunden ist und dass trotz kompakter Bauweise eine hohe Standsicherheit des abgestellten Fahrrades ermöglicht wird.

Die Erfindung ist im beigefügten Anspruchssatz definiert.

Erfindungsgemäß weist der Steher auf der der Rahmenaufnahme in Fahrrichtung gegenüberliegenden Seite eine Reifenaufnahme auf, die über einen Stelltrieb in Fahrrichtung zwischen einer Ruhestellung und einer Haltestellung verlagerbar ist. Zufolge dieser Merkmale wird in der Haltestellung der Reifenaufnahme der von der Reifenaufnahme aufgenommene Reifenabschnitt des Fahrrades gegen den von der Rahmenaufnahme aufgenommenen Rahmenabschnitt gespannt, weil einerseits die über den Stelltrieb gegen den Reifen angestellte Reifenaufnahme das Fahrrad mit einer in Fahrrichtung wirkenden Druckkraft beaufschlagt, während die Rahmenaufnahme jener Druckkraft entgegenwirkt und das Fahrrad an einer Bewegung in Fahrrichtung hindert. Folglich kann das abgestellte Fahrrad in seiner Fahrlage kraftschlüssig und somit standsicher in der Halterung festgelegt werden. In diesem Zusammenhang ist es von Vorteil, wenn die Reifenaufnahme den aufgenommenen Reifen zumindest so umgreift, dass ein Verschwenken der Radachse behindert wird. Dadurch, dass zur Fixierung des Fahrrades in der Haltestellung sowie zum Lösen der Fixierung lediglich der Stelltrieb zu betätigen ist, kann der Anwender beim Abstell- bzw. beim Entnahmevorgang das Fahrrad mit zumindest einer Hand festhalten und den Rahmen in der Rahmenaufnahme vorpositionieren, sodass dabei ein plötzliches Umkippen des Fahrrades vermieden wird. Obwohl eine Fahrrichtung grundsätzlich als sowohl von der Rückseite zur Vorderseite des Fahrrades verlaufend, als auch vice versa aufgefasst werden kann, sodass entweder ein Vorderreifen oder auch ein Hinterreifen von der Reifenaufnahme aufgenommen werden kann, ergeben sich besonders stabile Haltebedingungen, wenn die Rahmenaufnahme einen Unterrohrabschnitt im Bereich des Kurbeltriebes des Fahrrades aufnimmt. Die Reifenaufnahme kann einen Vorderreifenabschnitt in Haltestellung so aufnehmen, dass die von der Reifenaufnahme ausgehende Kraftwirkungslinie durch die Radnabenachse des Vorderrades verläuft.

Um gerade im Zusammenhang mit öffentlichen Fahrradabstellplätzen einen möglichst geringen Bauraumbedarf der erfindungsgemäßen Halterungen zu schaffen, ohne dass hierfür zusätzliche Einbauten in den Boden eingelassen werden müssten, bildet der Stelltrieb eine Gelenkschere, die wenigstens teilweise in den Steher einziehbar an diesem angelenkt ist. Dadurch wird eine kompakte Bauweise der Halterung ermöglicht, weil die Gelenkschere in zusammengelegter Form ein relativ geringes Packmaß aufweist und die Dimensionen des Stehers dementsprechend gewählt werden können. Zudem ermöglicht die aus dem Steher ausgefahrene Gelenkschere in Haltestellung eine druckfeste und somit stabile Verbindungsstruktur zwischen Reifenabschnitt und Steher.

Um einen raschen und für den Anwender bequemen Abstell- sowie Entnahmevorgang zu ermöglichen, ist ein Scherenarm der Gelenkschere durch einen Führungsschlitz des Stehers hindurch über ein Führungselement mit einem Betätigungshebel verbunden. Zufolge dieser Maßnahmen kann das Fahrrad sowohl beim Abstell- als auch beim Entnahmevorgang mit beiden Händen des dabei stehenden Anwenders am Fahrradlenker sicher gehalten werden, während das Ausfahren der Gelenkschere als Stelltrieb aus der Ruhestellung wie auch das Einziehen der Gelenkschere aus der Haltestellung über den Betätigungshebel und somit das Festlegen des Fahrrades bzw. das Lösen desselben beispielsweise per Fuß erfolgen kann.

Wenngleich die Breite des Führungsschlitzes grundsätzlich so gewählt werden kann, dass das diesen durchsetzende Führungselement insbesondere bei vertikal in Steherlängsrichtung verlaufendem Führungsschlitz unter Vorspannung in diesem verschiebbar gelagert ist, ergeben sich in diesem Zusammenhang besonders günstige Handhabungsbedingungen, wenn das Führungselement eine über den Betätigungshebel lösbare, an eine Bremsfläche des Stehers angestellte Bremsbacke aufweist. Dadurch wird sowohl eine leichte Verschiebbarkeit des Führungselementes entlang des Führungsschlitzes als auch eine sichere Fixierung der Gelenkschere, insbesondere in Ruhe- und Haltestellung, gewährleistet. Beispielsweise kann der Betätigungshebel drehfest mit dem Führungselement verbunden sein, sodass eine Drehung des Betätigungshebels um die Längsachse des Führungselementes die Bremsbacken reibschlüssig mit den Bremsflächen des Stehers verbindet. Für konstruktiv einfache Bedingungen kann das Führungselement beispielsweise als Verbindungsstück mit Vierkantprofil bzw. als kurze Vierkantstange ausgebildet sein, wobei dann die vier Längskanten der Vierkantstange die Bremsbacken und die innenliegenden Randflächen des Führungsschlitzes des Stehers die Bremsflächen bilden. Es ist aber grundsätzlich auch denkbar, dass das Führungselement mit dem Steher in einem für den Fachmann bekannten Sperrklinkenmechanismus zusammenwirkt.

Damit die erfindungsgemäße Halterung auch bei unterschiedlichen Reifenbreiten und Rahmenrohrdicken eingesetzt werden kann, wird vorgeschlagen, dass die Rahmenaufnahme und / oder die Reifenaufnahme von einer Aufnahmebasis V-förmig vorragende Aufnahmewangen ausbilden. Zufolge dieser Merkmale bilden die entsprechenden Aufnahmen Auflagepunkte für die jeweiligen, in Richtung der Radnabenachse einander gegenüberliegenden Reifenwandabschnitte des aufgenommenen Reifens bzw. für die seitlichen, einander gegenüberliegenden Rahmenrohrabschnitte unabhängig von der Reifenbreite bzw. Rahmenrohrdicke, sodass in Haltestellung ein Verkippen des Fahrrades quer zur Fahrrichtung vermieden werden kann.

Um den Einsatz der erfindungsgemäßen Halterung auch auf Freiflächen mit weichem Untergrund, beispielsweise auf Wiesen oder neben Feldwegen, zu ermöglichen, kann der Steher der Halterung eine Bodenverankerung aufweisen. Die Bodenverankerung kann eine Verankerungsplatte umfassen, auf die der Steher aufgesetzt ist, wobei die Verankerungsplatte dann beispielsweise über Schrauben am Untergrund befestigt wird. In diesem Zusammenhang kann die Bodenverankerung auch mittels Erdschrauben direkt am Erdreich befestigt werden, sodass das Aufstellen der Halterung nicht nur auf harte Beton- bzw. Asphaltflächen beschränkt ist.

In der Zeichnung ist der Erfindungsgegenstand beispielsweise dargestellt. Es zeigen
- Fig. 1: eine schematische Darstellung eines in seiner Fahrlage in einer erfindungsgemäßen Halterung abgestellten Fahrrades,
- Fig. 2: eine Detailansicht der in Fig. 1 gezeigten Halterung in Haltestellung in einem größeren Maßstab,
- Fig. 3: eine erfindungsgemäße Halterung in Ruhestellung in einem noch größeren Maßstab und
- Fig. 4: einen Schnitt entlang der Linie IV - IV der Fig. 2 in einer Draufsicht in einem größeren Maßstab.

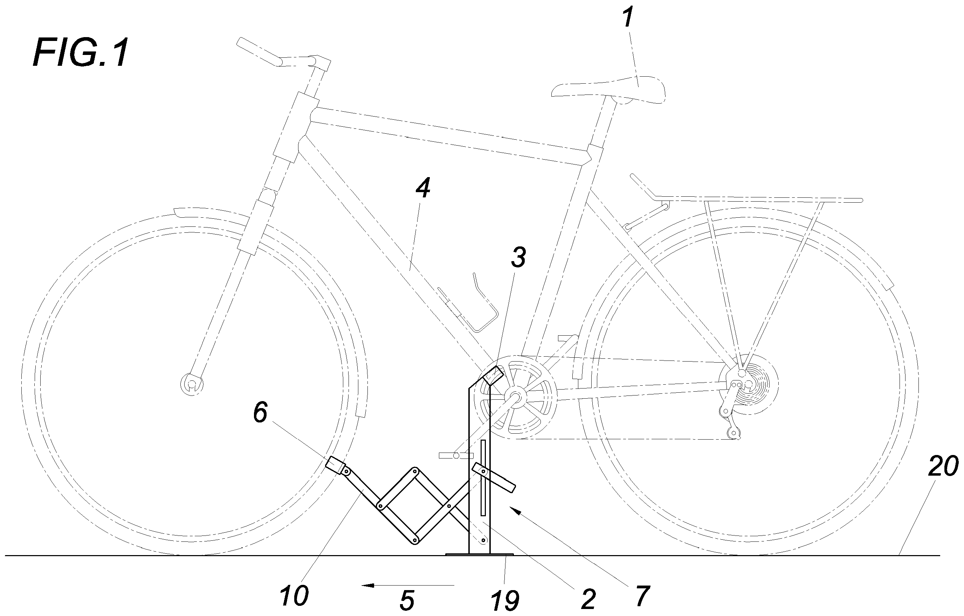

Eine erfindungsgemäße Halterung für ein Fahrrad 1 in seiner Fahrlage weist einen Steher 2 auf, der eine Rahmenaufnahme 3 zur Abstützung des Fahrradrahmens 4 in einer Fahrrichtung 5 umfasst. Der Steher 2 weist auf der der Rahmenaufnahme 3 in Fahrrichtung 5 gegenüberliegenden Seite eine Reifenaufnahme 6 auf, die über einen Stelltrieb 7 in Fahrrichtung 5 zwischen einer Ruhestellung und einer in Fig. 1 dargestellten Haltestellung verlagerbar ist.

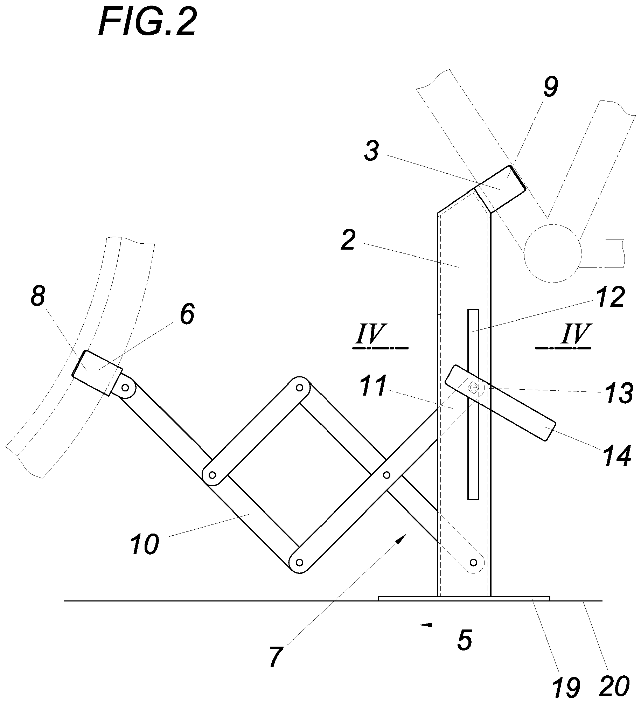

Fig. 2 zeigt eine Detailansicht einer erfindungsgemäßen Halterung in einer Haltestellung. Dabei wird der von der Reifenaufnahme 6 gehaltene Reifenabschnitt 8 des Fahrrades 1 gegen den von der Rahmenaufnahme 3 gehaltenen Unterrohrabschnitt 9 gespannt, weil einerseits die über den Stelltrieb 7 gegen den Reifen angestellte Reifenaufnahme 6 das Fahrrad 1 mit einer in Fahrrichtung 5 wirkenden Druckkraft beaufschlagt, während die Rahmenaufnahme 3 jener Druckkraft entgegenwirkt und das Fahrrad 1 an einer Bewegung in Fahrrichtung 1 hindert.

Gemäß der in den Zeichnungen dargestellten Ausführungsform einer erfindungsgemäßen Halterung, bildet der Stelltrieb 7 eine Gelenkschere 10, die wenigstens teilweise in den Steher 2 einziehbar an diesem angelenkt ist. Ein Scherenarm 11 der Gelenkschere 10 ist durch einen Führungsschlitz 12 des Stehers 2 hindurch über ein beispielsweise als Vierkant-Verbindungsstück ausgebildetes Führungselement 13 mit einem Betätigungshebel 14 verbunden.

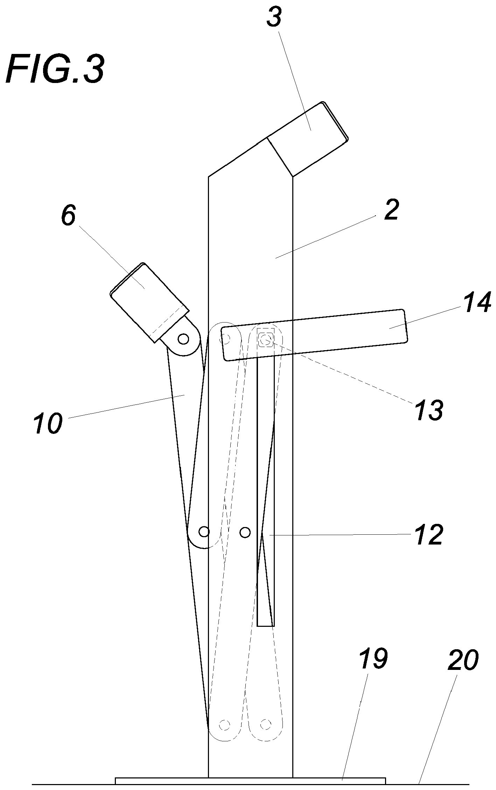

Wie in Fig. 3 dargestellt, wird die Gelenkschere 10 in Ruhestellung zumindest teilweise in den Steher 2 eingezogen.

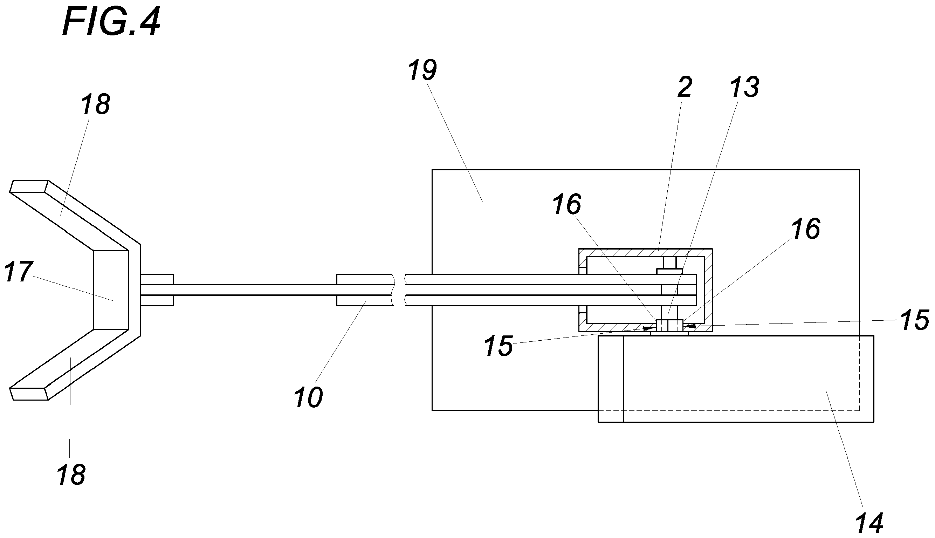

Das Führungselement 13 kann eine über den Betätigungshebel 14 lösbare, an eine Bremsfläche 15 des Stehers angestellte Bremsbacke 16 aufweisen. Fig. 3 zeigt dabei das Führungselement 13 in einer entlang des Führungsschlitzes 12 verschiebbaren Stellung, wohingegen in Fig. 2 und Fig. 4 ein über den in der gezeigten Ausführungsform drehfest mit dem Führungselement 13 verbundenen Betätigungshebel 14 in eine kraftschlüssige Bremsstellung gebrachtes Führungselement 13 zu erkennen ist.

Wie aus Fig. 4 hervorgeht, können die Reifenaufnahme 6 und sowie auch die aufgrund der Schnittansicht in Fig. 4 nicht näher dargestellte Rahmenaufnahme 3 von einer Aufnahmebasis 17 V-förmig vorragende Aufnahmewangen 18 ausbilden.

Um den Einsatz einer erfindungsgemäßen Halterung sowohl auf hartem Untergund wie beispielsweise Beton- oder Asphaltflächen, als auch auf weichem Untergrund wie z.B. Wiesen zu ermöglichen, kann deren Steher 2 eine beispielsweise als mit dem Untergrund 20 verschraubbare Verankerungsplatte ausgebildete Bodenverankerung 19 aufweisen.

Um eine Diebstahlsicherung vorzusehen, kann der Steher 2 beispielsweise eine Aufnahmeöse für ein Fahrradschloss oder bereits selbst ein Kettenschloss aufweisen.

## Patentansprüche

1. Halterung für ein Fahrrad (1) in seiner Fahrlage, mit einer an einem Steher (2) vorgesehenen Rahmenaufnahme (3) zur Abstützung des Fahrradrahmens (4) in einer Fahrrichtung (5), wobei der Steher (2) auf der der Rahmenaufnahme (3) in Fahrrichtung (5) gegenüberliegenden Seite eine Reifenaufnahme (6) aufweist, die über einen Stelltrieb (7) in Fahrrichtung (5) zwischen einer Ruhestellung und einer Haltestellung verlagerbar ist, und wobei der Stelltrieb (7) eine Gelenkschere (10) bildet, die wenigstens teilweise in den Steher (2) einziehbar an diesem angelenkt ist, **dadurch gekennzeichnet, dass** ein Scherenarm (11) der Gelenkschere (10) durch einen Führungsschlitz (12) des Stehers (2) hindurch über ein Führungselement (13) mit einem Betätigungshebel (14) verbunden ist.

2. Halterung nach Anspruch 1, **dadurch gekennzeichnet, dass** das Führungselement (13) eine über den Betätigungshebel (14) lösbare, an eine Bremsfläche (15) des Stehers (2) angestellte Bremsbacke (16) aufweist.

3. Halterung nach Anspruch 1 oder 2, **dadurch gekennzeichnet, dass** die Rahmenaufnahme (3) und / oder die Reifenaufnahme (6) von einer Aufnahmebasis (17) V-förmig vorragende Aufnahmewangen (18) ausbilden.

4. Halterung nach einem der Ansprüche 1 bis 3, **dadurch gekennzeichnet, dass** der Steher (2) eine Bodenverankerung (19) aufweist.

## Claims

1. Holder for a bicycle (1) in its travel position, having a frame receiver (3) provided on a upright (2) for supporting the bicycle frame (4) in a travel direction (5), wherein the upright (2) has a tyre receiver (6) on the side opposite the frame receiver (3) in the travel direction (5), which tyre receiver can be displaced in the travel direction (5) between an inoperative position and a holding position by means of an adjusting drive (7), and wherein the adjusting drive (7) forms an articulated linkage (10) which is articulated to the upright (2) so as to be at least partially retractable into it, **characterised in that** a linkage arm (11) of the articulated linkage (10) is connected to an actuating lever (14) through a guide slot (12) of the upright (2) via a guide element (13).

2. Holder as claimed in claim 1, **characterised in that** the guide element (13) has a brake shoe (16) which can be released via the actuating lever (14) and is applied against a braking surface (15) of the upright (2).

3. Holder as claimed in claim 1 or 2, **characterised in that** the frame receiver (3) and/or the tyre receiver (6) form receiver cheeks (18) which project in a V-shape from a receiver base (17).

4. Holder as claimed in any one of claims 1 to 3, **characterised in that** the upright (2) has a ground anchor (19).

## Revendications

1. Support pour un vélo (1) dans sa position de conduite, avec un réceptacle de cadre (3) prévu sur une béquille (2) pour soutenir le cadre de vélo (4) dans une direction de déplacement (5), dans lequel la béquille (2) présente, du côté opposé au réceptacle de cadre (3) dans la direction de déplacement (5), un réceptacle de pneu (6) qui peut être déplacé par une commande de réglage (7) dans la direction de déplacement (5) entre une position de repos et une position d'appui, et dans lequel la commande de réglage (7) forme un ciseau articulé (10) qui s'articule sur la béquille (2) de manière au moins partiellement escamotable dans celle-ci, **caractérisé en ce qu'**une branche de ciseau (11) du ciseau articulé (10) est reliée, à travers une fente de guidage (12) de la béquille, (2) par un élément de guidage (13) avec un levier d'actionnement (14).

2. Support selon la revendication 1, **caractérisé en ce que** l'élément de guidage (13) présente une plaquette de frein (16) débrayable par le levier d'actionnement (14), appliquée sur une surface de freinage (15) de la béquille (2).

3. Support selon la revendication 1 ou 2, **caractérisé en ce que** le réceptacle de cadre (3) et/ou le réceptacle de pneu (6) forment des joues de réception (18) dépassant en forme de V d'une base de réception (17).

4. Support selon une des revendications 1 à 3, **caractérisé en ce que** la béquille (2) présente un ancrage au sol (19).
